# EUROPEAN PATENT APPLICATION

(11) **EP 3 163 832 A1**
(43) Date of publication of application: **03.05.2017**
(21) Application number: 15306714.5
(22) Date of filing: 27.10.2015
(51) Int. Cl.: H04L 29/06

(54) **METHOD AND APPARATUS FOR SECURE ACCESS OF A SERVICE VIA CUSTOMER PREMISE EQUIPMENT**

(71) Applicant: Thomson Licensing, 92130 Issy-les-Moulineaux (FR)
(72) Inventor: ONNO, Stéphane, 35576 Cesson-Sévigné (FR); HEEN, Olivier, 35576 Cesson-Sévigné (FR); NEUMANN, Christoph, 35576 Cesson-Sévigné (FR)
(74) Representative: Huchet, Anne

(57) **Abstract**

Method and system for enabling secure access to a service via a customer premise equipment or virtual customer premise equipment (CPE/vCPE). When the service is requested by a user device, authentication is performed between the user device and the CPE/vCPE and subsequently a secure tunnel is established between the user device and the CPE/vCPE. Then, authentication is performed between the CPE/vCPE and the service provider and subsequently a secure tunnel is established between the CPE/vCPE and the service provider. Finally, a secure tunnel is established between the user device and the service provider within the previously established secure tunnels.

## Description

### TECHNICAL FIELD

This invention relates to a method and a system for accessing a service via customer premise equipment (CPE), for example a gateway, and more particularly, to a method and a system for accessing service via CPE by authenticating the CPE with the user device and the service provider.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In today's digital age, digital credential theft has the potential to cause critical danger for the credential owner. Some examples of the dangers include, but are not limited to: a theft of credential from an on-line retailer, wherein the attacker may use the credit card of the owner to illegitimately order items and/or divert the delivery of legitimately order to a different address, as well as access illegitimately access the owner's digital items and use the owner's cloud services; theft of credentials for on-line bank account information; and hacking of e-mail accounts.

Various solutions exist for such attacks based on verifying user information against network information known by the service or enabling a multi-factor authentication mechanism.

First, User access control policy may be implemented in a corporate network. Computer information (e.g. users, computers, and groups) is compared against a central directory such as LDAP or active directory, Microsoft Active Dir, to enable access to a given domain. Protocol such as 802.1 X access policy used in both wired and wireless contexts can bind user information to network information (e.g. MAC address). NuFW, NuFW: https://admin.fedoraproject.org/pkadb/acls/name/nufw, is another enterprise grade firewall that "performs an authentication of every single connection passing through the IP filter, by transparently requesting applicative credentials before any filtering decision is taken. The credentials are applicative in the sense that the credentials are associated with an application rather than strictly with a user, e.g. a specific user, group of users, or a machine. Practically, this means security policies can integrate with the user's directory, and bring the notion of user ID down to the IP layers". These solutions are not adapted for end users connecting web service through Internet from any browser and without administrator able to set policy at the user granularity.

Also, a 2-step Web access authentication may be implemented. This solution is used by banks and Google, Google 2-step verification, to prevent someone that has stolen a pin code or a password from acting maliciously. The basic idea is to send a specific code through another communication channel to authenticate the user against a second authentication factor. Generally, it consists in sending a SMS to the user's phone. Although this solution improves the security, it also brings annoyances to the user obliged to wait for the pin code and type it afterwards each time he connects to the service. In addition, it does not prevent an attacker that also steals the phone while he knows the pin code as well, this even for a short lapse of time.

Today, a gateway embeds a lot of network function (DHCP, NAT, parental control,...) and does not evolve a lot. NFV shifts the aforementioned network functions from the gateway to the cloud so as to provide new features and reduce gateway maintenance and manufacturing cost. In short, the GW (CPE) connects to a Virtual CPE (VCPE) in the cloud which in turn provides the virtualized functions (DHCP service to get an IP address for example) from a Virtual machine for example.

Virtual Private Networks (VPN) allow a form of access segregation, at the network level. However, VPNs operate at the network level and do not provide integration with the service level on a target application or native integration with a gateway

### SUMMARY

Embodiments according to the present principles provide method and system for enabling secure access to a service via a customer premise equipment (CPE). When the service is requested, secure tunnels are established between a user device and the CPE, between the CPE and the service provider, and between the user device and the service provider to enable secure access.

According to an embodiment, a method for controlling a customer premise equipment (CPE), comprises: receiving, from a user device, a request to access a service; mutually authenticating with the user device, and establishing a first secure communications channel between the CPE and the user device after authentication; mutually authenticating with a service provider associated with the service, and establishing a second secure communications channel between the CPE and the service provider after authentication; and receiving and transmitting data between the user device and the service provider via a third secure communications channel established between the user device and the service provider, the third secure communications channel being encapsulated within the first and second secure communications channels.

According to another embodiment, a customer premise equipment (CPE), comprises: a communications interface, connected to a user device via a first network, and a service provider via a second network; and a processor configured to: receive from the user device a request to access the service; mutually authenticate with the user device, and establish a first secure communications channel with the user device after authentication; mutually authenticate with the service provider associated with the service, and establish a second secure communications channel with the service provider after authentication; and receive and transmit data between the user device and the service provider via a third secure communications channel established between the user device and the service provider, the third secure communications channel being encapsulated within the first and second secure communications channels

According to another embodiment, a user device for accessing a service, comprises: a communications interface connected to a customer premises equipment via a first network; a processor configured to transmit a request to the CPE to access the service, to mutually authenticate with the CPE, and to establish a first secure communications channel with the CPE after authentication, wherein upon receiving via the CPE, an approval from a service provider associated with the service for accessing the service, the approval being encapsulated in a second secure communications channel between the CPE and the service provider, the processor configured to establish a third communications channel between the CPE and the service provider, the third secure communications channel being encapsulated with the first and second secure communications channels, and access the service via the third secure communications channel.

According to another embodiment, a method for controlling a user device, comprises: transmitting, to a customer premise equipment (CPE), a request to access a service; mutually authenticating with the CPE, and establishing a first secure communications channel with the CPE after authentication; receiving, via the CPE, an approval from a service provider associated with the service for accessing the service, the approval being encapsulated in a second secure communications channel between the CPE and the service provider; establishing a third secure communications channel with the service provider, the third secure communications channel being encapsulated within the first and second secure communications channels; and accessing the service from the service provider via the third secure communications channel.

According to another embodiment, a method for providing access to secure service comprises: receiving a request to access a secure service from a CPE, confirming that the request is received from an authorized CPE, establishing a secure tunnel between the CPE and the service, and transmitting an approval to a user device via the secure tunnel, establishing another secure tunnel with the user device, the another secure tunnel being encapsulated within the secure tunnel, and providing access to the service via the another secure tunnel.

According to another embodiment, a non-transitory computer program product comprises program instructions to execute the following steps when the program is executed on a processor: receiving, from a user device, a request to access a service; mutually authenticating with the user device, and establishing a first secure communications channel between the CPE and the user device after authentication; mutually authenticating with a service provider associated with the service, and establishing a second secure communications channel between the CPE and the service provider after authentication; and receiving and transmitting data between the user device and the service provider via a third secure communications channel established between the user device and the service provider, the third secure communications channel being encapsulated within the first and second secure communications channels.

Advantageously, mutual authenticating with the CPE is performed using a serial number associated with the CPE.

Advantageously, the request to access the service is transmitted/received from one of a browser plugin associated with the user device, and an instruction set transmitted from the service provider and processed by the user device.

Advantageously, the CPE is one of a physical CPE disposed in a customer location, and a virtual CPE.

Advantageously, the received list of services is received from one of the user device and another service provider.

Advantageously, the CPE receives a list of services associated with CPE based authentication, and the CPE performs the mutually authenticating, the receiving, and the accessing steps if the service is included in the list of services associated with CPE based authentication.

### BRIEF DESCRIPTION OF THE DRAWINGS

The above-mentioned and other features of the present principles, and the manner of attaining them, will become more apparent and the present principles will be better understood by reference to the following description of exemplary embodiments taken in conjunction with the accompanying drawings, wherein
Fig. 1a-b are illustrations of systems in which the exemplary embodiments according to the present principles may be applied;
Fig. 2 is a block diagram of customer premise equipment such as a gateway that may be used in exemplary embodiments according to the present principles;
Fig. 3 is a pictorial example of a gateway based authentication setup according to the present principles;
Fig. 4 is a pictorial example of gateway based authentication according to the present principles;
Fig. 5 is a pictorial example of CPE based authentication with end-user control according to the present principles;
Fig. 6 is a pictorial example of vCPE based authentication with end-user control according to the present principles;
Fig. 7 is a pictorial example illustrating denial of access without CPE/vCPE authentication according to the present principles;
Fig. 8 is a pictorial example of CPE based authentication with ISP control according to the present principles;
Fig. 9 is a pictorial example of vCPE based authentication with ISP control according to the present principles;
Fig. 10 is a pictorial example of gateway authentication for bank service according to the present principles;
Fig. 11 is a pictorial example of Set-Top-Box authentication for restricted OTT service access according to the present principles;
FIG. 12 is a pictorial example of SmartHome Box authentication for restricted SmartHome security setting according to the present principles.
FIG. 13 illustrates a flowchart of the process for setting up the gateway based authentication according to the present principles.
FIG. 14 illustrates a flowchart of the process for providing service access according to the present principles

The description set out herein illustrates exemplary embodiments for implementing various aspects of the present principles. Such examples are not to be construed as limiting the scope of the claims in any manner.

### DETAILED DESCRIPTION

The present principles relate to a method and a system for providing a secure and seamless authentication method for allowing end users to access a service from a user device to a web browser or an application using a secure intermediate device. The service provides credentials (later called "applicative credentials"), such as a login and password. Using the present principles, these credentials are not necessarily sufficient to access the service. The authentication is seamless in the sense that it does not require additional user interactions after the initial setup.

Additionally, the present principles enables distinguishing and setting different rights levels depending on the request level for some service. For example, in a bank service, the typical request levels are: 1) Get the account balance (Read operation). In that case, the applicative credentials are sufficient to perform this operation; 2) Purchase operation or bank transfer (Write operation). In that case, the applicative credentials plus the additional authentication according to the invention are necessary.

According to embodiments according to the present principles, we associate a CPE based authentication to a service based authentication. The CPE acts as an intermediate device to mediate all the secure connections to a given service (e.g. bank.com) which supports the CPE based authentication. Once the end-user configures his browser's plugin or application, the intermediate CPE and the service access, he can seamlessly connect to the web service with a high level of security.

The exemplary embodiments provide an authentication service that fulfills the following properties. First, the authentication factor is the applicative credentials for connecting to the service (login/password) as usual. Second, the data must go through the trusted intermediate device (e.g. CPE). The intermediate device is trusted for providing the additional authentication. However, the applicative traffic is end-to-end encrypted and thus, even though the traffic flows through the intermediate device, the intermediate device is not able to read or tamper the applicative data.

In the exemplary embodiments, the secure intermediate device is a customer premise equipment (CPE) that is typically located in the customer's home. The CPE can be either the Broadband Gateway (DSL, Cable, Fiber), a Set-Top-Box or even a vCPE - Virtual CPE - which can be a Virtual Gateway or a Virtual Set-Top-Box running in the cloud that delivers Internet or Video to the customer. vCPEs are typically implemented by a service provider using a Network Functions Virtualization platform and uniquely assigned to a specific customer. The CPE/vCPE can also be a SmartHome Box bringing digital assistants with personalized services dealing with Home Care (home security), Home Comfort (home monitoring & control), as well as Family Care (kids, elderly care).

The CPE based authentication according the present principles can either be setup and configured by the end-user or by an Internet/Service Provider (ISP) as described below.

End-user control: The end-user configures on one side the CPE/vCPE and on the other side the given service provided by a service provider. On the CPE/vCPE side the CPE/vCPE configuration can be done via a GUI, that allows entering the URL of the applicative service. Alternatively, the URLs may be listed in a shared list, similar to profiles, wherein the user may select the URLs for which the CPE based authentication in accordance with the present principles is to be enforced. Various different configuration mechanisms may be provided, including, for example, GUIs, uploaded configuration files, and dedicated configuration files, e.g. smartphone. On the service side, the service configuration can be done either online using similar configuration mechanisms as discussed above via an application provided menu or offline via traditional mail or call to the service support. The service configuration determines which CPE/vCPE and which operations to the given service requires additional authentication according to the invention. For example, a customer may want to grant "bank transfer rights" only when he accesses the service from its broadband Gateway and not from everywhere else. He can still access to the "account balance" from everywhere.

**Internet/Service Provider (ISP) Control:** The ISP configures on one side the CPE/vCPE and on the other side the service (owned by a third party provider or the ISP itself) so that access to this given service requires the CPE-based authentication. The ISP established a list of URLs and provides it to the CPE/vCPE. Further, the ISP provides the list of CPE/vCPE identifiers to the service provider. As an example, an ISP grants access to watch "3^{rd} party OTT service" to an end-user from its residential STB (i.e. residential TV connected on the STB / Tablet connecting the Wi-Fi access point of the STB) but not from anywhere else to avoid sharing an entitled OTT service to a friend (e.g. tablet connecting OTT service via a mobile access). Restricted access can consist in allowing specific contents from an OTT provider, according to some viewing constraints (quality, bandwidth, rating, pricing, age...)

In a smart home application, such as SmartHome provided by Technicolor SA, several information flows may deserve separate authentication levels, according to the user's preference. For instance, checking alarm status may be allowed from any place (using the regular SmartHome authentication). On the other hand, modifying alarm settings requires the additional CPE/vCPE based authentication, according to the present principles.

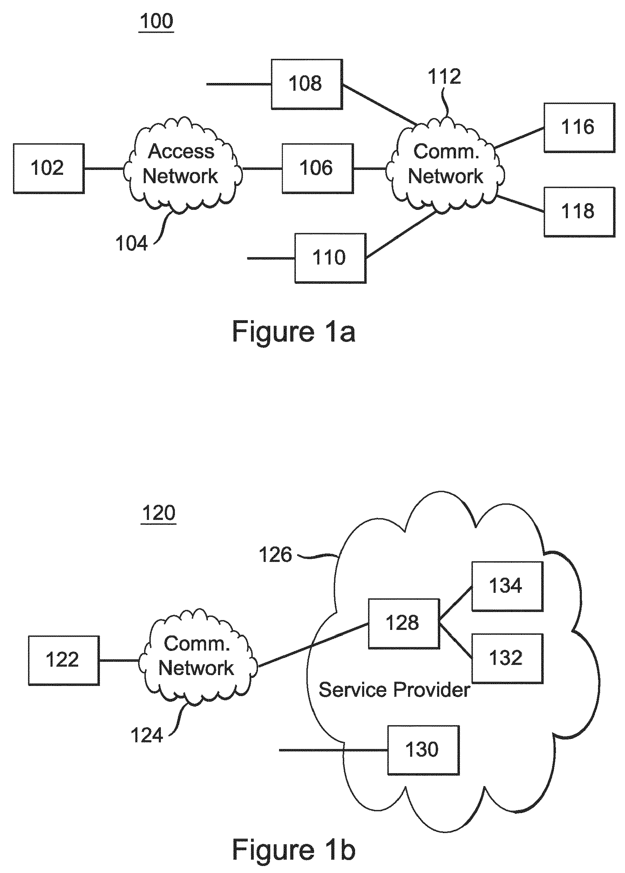

Fig. 1 a illustrates a system that can be used in accordance with the present principles. In system 100, a user device 102 is used to access a service from a service provider 116 or 118 via access network 104, CPE 106 and communications network 112. The access network 104 may include, for example a home network, either wired or wireless, that enables a user to connect to the Internet via CPE106. CPE 106 is one of a plurality of CPEs that are connected to communication network 112 and may access the various service providers connected to the network. The CPE 106 may be, for example a gateway, which provides an interface between the user device 102 and communications network 112, such as the Internet, in order to access a service from a service provider 116 or 118. User device 102 is a device that enables a user to access a service over the Internet, including, but not limited to, a smart phone, a personal computer, tablet, a wireless PDA, or other suitable user communication device. Fig. 1 b illustrates a system, similar to that of Fig. 1 a and uses virtual CPEs that are implemented by service provider 126. In this case vCPE is virtually implemented and uniquely assigned similar to a CPE, and provides similar functionality as CPE 104 for connecting the user device to a service provider.

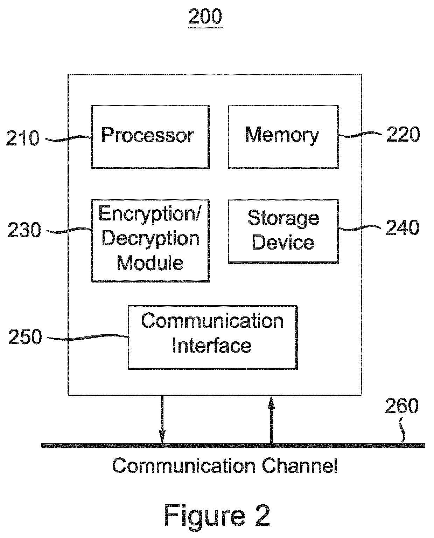

Fig. 2 illustrates a block diagram of CPE 200, corresponding to CPE 106 of Fig. 1 a, in which various aspects of the exemplary embodiments of the present principles may be implemented. The CPE 200 may include at least one processor 210 configured to execute instructions loaded therein for implementing the various processes as discussed above. Processor 210 may include embedded memory, input output interface and various other circuitries as known in the art. The CPE 200 may also include at least one memory 220 (e.g., a volatile memory device, a non-volatile memory device). CPE 200 may additionally include a storage device 240, which may include non-volatile memory, including, but not limited to, EEPROM, ROM, PROM, RAM, DRAM, SRAM, flash, magnetic disk drive, and/or optical disk drive. The storage device 240 may comprise an internal storage device, an attached storage device and/or a network accessible storage device, as non-limiting examples.

Program code to be loaded onto processors 210 to perform the various processes described hereinabove may be stored in storage device 240 and subsequently loaded onto memory 220 for execution by processors 210. In accordance with the exemplary embodiments of the present principles, one or more of the processor(s) 210, memory 220, and storage device 240 may store one or more of the various items during the performance of the processes discussed herein above.

The CPE 200 also includes communication interface 250 that enables communication with other devices via communication channel 260. The communication interface 250 may include, but is not limited to a transceiver configured to transmit and receive data from communication channel 260. The communication interface may include, but is not limited to, a modem or network card and the communication channel may be implemented within a wired and/or wireless medium. The various components of CPE 200 may be connected or communicatively coupled together using various suitable connections, including, but not limited to internal buses, wires, and printed circuit boards.

The exemplary embodiments according to the present principles may be carried out by computer software implemented by the processor 210 or by hardware, or by a combination of hardware and software. As a non-limiting example, the exemplary embodiments according to the present principles may be implemented by one or more integrated circuits. The memory 220 may be of any type appropriate to the technical environment and may be implemented using any appropriate data storage technology, such as optical memory devices, magnetic memory devices, semiconductor-based memory devices, fixed memory and removable memory, as non-limiting examples. The processor 210 may be of any type appropriate to the technical environment, and may encompass one or more of microprocessors, general purpose computers, special purpose computers and processors based on a multi-core architecture, as non-limiting examples. It will be noted that the functions carried out by CPE 200 could be performed by a single entity or multiple entities in combinations and configurations other than that shown. Thus, CPE 200 may represent logical functions rather than a physical device without departing from the scope of the present invention. Although Figure 2 has been described in the context of a CPE, it is to be understood that the components described are also applicable to a user device, for example, but not limited to a PC, laptop and tablet. It is clear that the components of processor, memory, storage device, communications interface, and encryption/decryption module are typically found in such devices and may be used to implement the various steps performed when operating with the CPE described above.

Various illustrative examples and use cases are now described. The first set of examples are those that involve end-user control, wherein the gateway is the CPE, and the second set of examples involve ISP control, wherein a set top box (STB) is the CPE/vCPE.

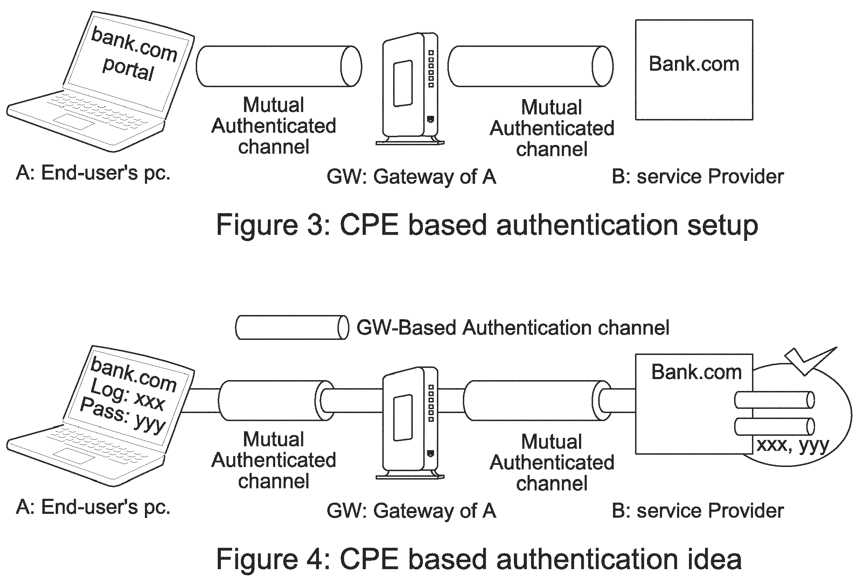

The setup and authentication according to the first set of examples are shown in Figures 3 and 4. The embodiments that involve the first set of examples in which the gateway is the CPE include the following: a mechanism for mutual authentication between A and CPE/VCPE exist. E.g. A has a login/password to authenticate on the CPE/VCPE and the CPE/VCPE has some certificates. A and CPE/VCPE may also use non-cryptographic authentication means, such as being connected on a same physical network considered trusted (e.g. a same home network, a USB wire between a phone and a CPE/VCPE, etc.) or even a VPN access from outside. A mechanism for mutual authentication between CPE/VCPE and B exist. E.g. CPE/VCPE has a certificate with its serial number (signed by some known CA), and the B knows this serial number. Similarly, B has a standard SSL certificate signed by some known CA. Means for mutual authentication between A and B exist. E.g. A has a login/password to authenticate himself on B. Similarly, B has a standard SSL certificate signed by some known CA. B knows that, for some functions of its services A must connect using CPE/VCPE. Otherwise this function is not available.

As shown in Figure 3, in the setup of the service access, for example, the user wants to access a bank site from home only, involves the following steps. This is also referred to as the configuration stage. A configures the list of services that support CPE/VCPE-based Authentication using a dedicated plugin of his browser. This plugin is used by the user to decide whether he wants to use the secure service or not. A connects to the CPE/VCPE-based authentication service and enters the list of allowed URL (e.g. bank.com) but not bank2.com even if Bank2.com has a trusted certificate) and picks the serial number of the CPE/VCPE. This operation can be done manually by the user. A connects to the bank service offline (bank.com) and enters the CA provider of the CPE/VCPE certificate issuer and the serial number of the CPE/VCPE that he picks from his CPE/VCPE. This offline operation may be done by traditional mail or phone call for instance.

After the configuration for CPE/vCPE authentication is completed, the enforcement stage processes are implemented. The end-user launches its plugin and connects the web service URL of B (e.g. https://bank.com/transfer) to get the HTML page and fills the applicative credentials. The plugin checks the URL of B against the CPE/vCPE list it has requested to the CPE/VCPE or previously stored locally. Since the end-user A enters an URL of B in the list, the Browser's plugin notices that the user is trying to access a service that supports CPE/VCPE-based authentication. Ideally, the web service displays a visual indication when the CPE/VCPE-based authentication is required and is on use, otherwise the user connects the web service as usual and the plugin does nothing.

For each URL corresponding to a configured applicative service, the plugin establishes a trusted channel between A and CPE/VCPE, indicated as "mutual authenticated channel" in figure 3, and sends the URL of B to the CPE/VCPE. The CPE/VCPE receives the URL and establishes a mutual authenticated tunnel, such as a TLS tunnel and indicated as "mutual authenticated channel" in figure 3, between the CPE/vCPE (GW in this example) towards B. As shown in Figure 4, once the two tunnels have been established, A initiates a secure authenticated channel, indicated as "GW-Based authentication channel" in figure 4, with B that traverses CPE/VCPE and the two authenticated tunnels above. For example, A and B may use an authenticated Diffie-Hellman channel (using the credential and certificates in the pre requirements) to establish a session key between A and B. Once this session is established, A and B have a secure authenticated channel that is tunneled through the tunnels A-CPE/VCPE and CPE/VCPE-B. In another embodiment which does not require the creation of a trusted channel between A and the CPE/VCPE as presented hereinbefore, the CPE/VCPE establishes the mutual authentication with B only when it detects that A initiates a secure connection with B. In that case, the CPE/VCPE buffers the initial network packets sent from A to B, establishes a tunnel between CPE/VCPE and B, and forwards the buffered packets and all the upcoming packets sent from A to B into the established tunnel.

The enforcement stage here refers to the communications and operations between A and B once the configuration for CPE/VCPE based authentication as described above has been completed between the user device, the CPE/vCPE, and the service provider. The enforcement stage notably comprises the steps of establishing secure tunnels and granting access to a requested service. When a given service of B is configured with the CPE/VCPE-based authentication service, B must check if A is actually communicating with B using the designated CPE/VCPE. Therefore, B upon receiving communications from A, B checks if the secure authenticated channel is authenticated by A and if this secure authenticated channel arrives through a tunnel authenticated by CPE/VCPE. In one embodiment: Recall that packets from A-B are encapsulated into packets from CPE/VCPE-B. When B decodes a packet from CPE/VCPE-B, B associates a context I1 to the packet, for instance an SSL id tunnel number. When B decodes the inner packet from A-B, B associates a second context I2. As soon as A-B is fully established, i.e. when the authentication between A and B is complete, B learns that I1 and I2 are associated. For all subsequent packets of A-B within CPE/VCPE-B, B will check for the associations I1 and I2.

To gain access to the service, an attacker must know the applicative credentials then must steal and install the CPE/VCPE credentials on a device under his control. Although the risk is low, an additional trusted storage (e.g. TPM) can increase the security by storing CPE/VCPE credentials within protected hardware.

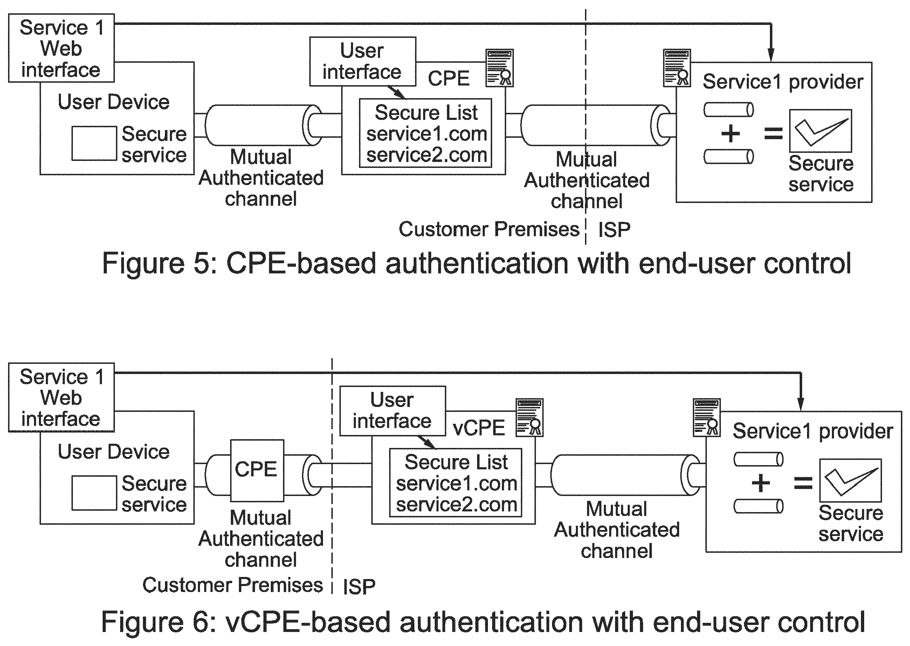

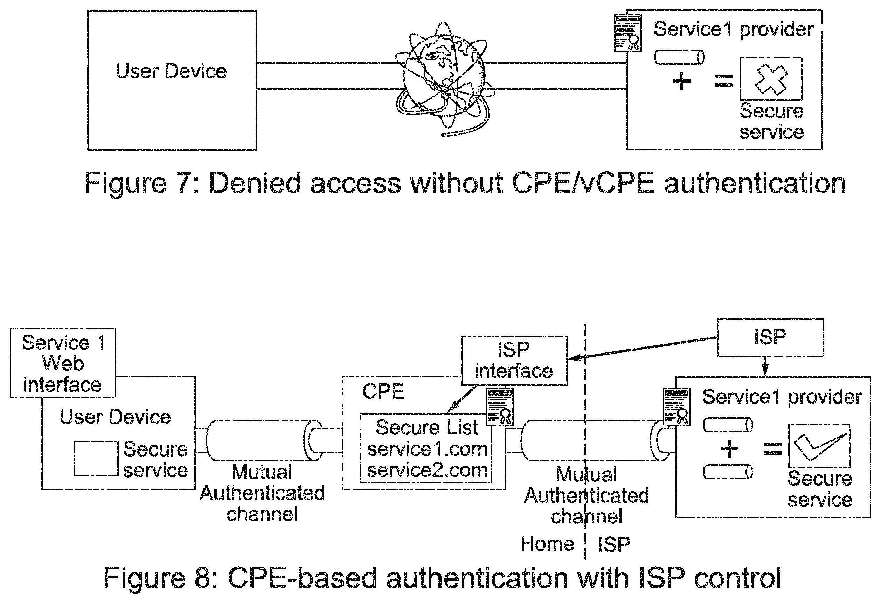

Figure 5 depicts an arrangement wherein the user device is granted access to a secure service via the CPE-based authentication controlled by the end-user. Here, the appropriate authenticated channels have been established between the user device, CPE, and Service Provider as described above. The secure service is designated within the user device, the service1.com is included in the list of secure services in the CPE, and the Service Provider has verified the presence of the secure authenticated tunnels, and thus allows the user device to access the designated secure service. Figure 6 depicts the same situation wherein the authentication is based on a vCPE in the cloud. Figure 7 depicts a denied access to the service since the user device does not access the secure service of the service provider via a CPE or vCPE. Here, mutual authenticated channels between the user device and the CPE/vCPE, and/or between the CPE/vCPE and the Service Provider is not confirmed, and thus the service provider does not provide access to the secure service.

The second set of examples relate to cases in which the ISP control is used, and the STB is the CPE/vCPE. In this case, the relevant configuration involves the following: a mechanism for mutual authentication between A and CPE/VCPE exist. E.g. A has a login/password to authenticate on the CPE/VCPE. The CPE/VCPE has some certificates. A and CPE/VCPE may also use non-cryptographic authentication means, like being connected via a same physical network considered trusted (e.g. a same home network, a USB wire between a phone and a CPE/VCPE, etc.); CPE/VCPE credentials for mutual authentication between CPE/VCPE and B exist. E.g. CPE/VCPE has a certificate with its serial number (signed by some known CA), and the B knows this serial number. Similarly, B has a standard SSL certificate signed by some known CA; a mechanism for mutual authentication between A and B exist. E.g. A has a login/password to authenticate himself on B. Similarly, B has a standard SSL certificate signed by some known CA; and B knows that, for some functions of its services A must connect using CPE/VCPE. Otherwise this function is not available.

The setup stage proceeds as follows: When a customer requests a secure service, for example OTT service or by default if the OTT service is available for all customers, the ISP adds the OTT service to the list of services of the CPE/vCPE that supports CPE/VCPE-based Authentication (e.g. using CPE-Wan management protocol). The end-user connects a CPE, provided by the service provider, via the STB Wi-Fi or through the LAN and launches the OTT service from a dedicated OTT service application running on his PC (or television or tablet or other client device). The application tries to access a service that supports CPE/VCPE-based authentication and establishes a trusted channel between A and CPE/VCPE and sends a service identification to the CPE/vCPE. Then the CPE/VCPE establishes a mutual authenticated tunnel between CPE/VCPE and B. Once the two tunnels have been established, thanks to the OTT application, A initiates a secure authenticated channel with B that traverses CPE/VCPE and the two authenticated tunnels above. A and B may use an authenticated Diffie-Hellman channel (using the credential and certificates in the pre requirements) to establish a session key between A and B. Once this session is established, A and B have a secure authenticated channel that is tunneled through the tunnels A-CPE/VCPE and CPE/VCPE-B.

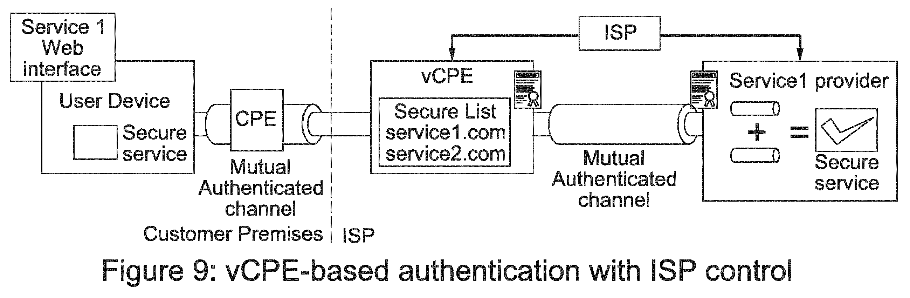

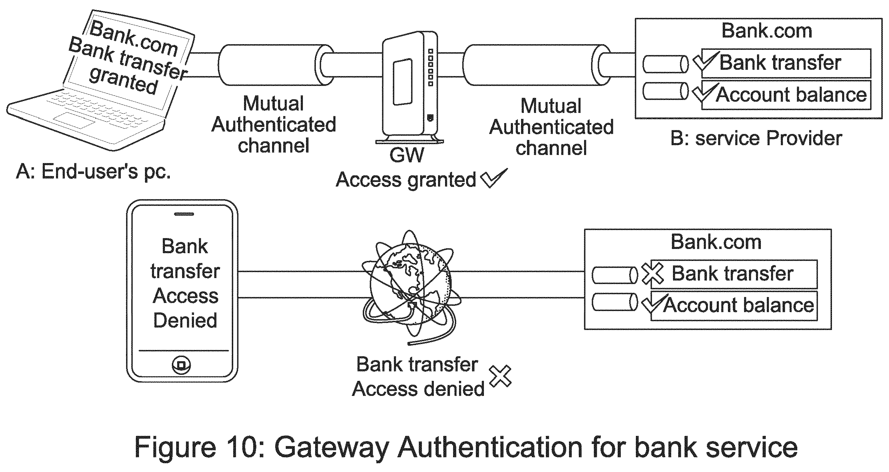

Figure 8 depicts a configuration in which the user device is granted access to a secure service of a service provider via the CPE-based authentication controlled by the ISP as described hereinabove. Figure 9 depicts a similar configuration in which the user device is grant access via authentication from the vCPE in the cloud. Similar to the end-user control Embodiment, Figure 10 above depicts situations in which the user device is allowed access to certain services, but is denied access to the secure services. In this case, account balance inquiries do not require CPE/vCPE based authentication, but bank transfers, which may require higher level of security, requires CPE/vCPE based authentication. Here, a PC that accesses bank.com through a CPE, such as a GW, has access to both services, but a mobile device that does not go through a CPE only has access to account balances, but not bank transfers.

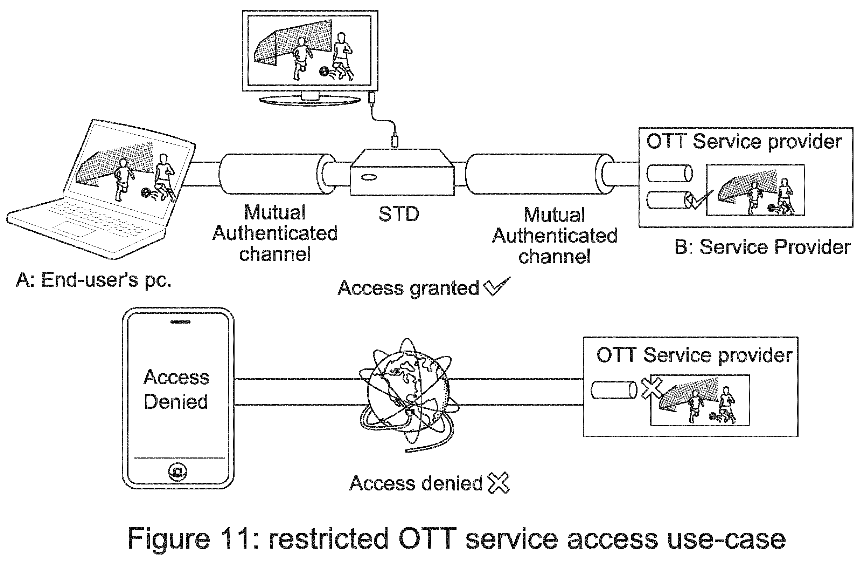

Figure 11 depicts the use-case in which the secure service comprises an Over the Top (OTT) service. The CPE/vCPE is the STB. An ISP grants access to the end-user for watching video streaming content from a third party OTT service provider from its PC connected to the STB via the Wi-Fi access point of the STB or reaching the STB inside the LAN. The end-user can connect the OTT service from his mobile but access to the same secure service is denied.

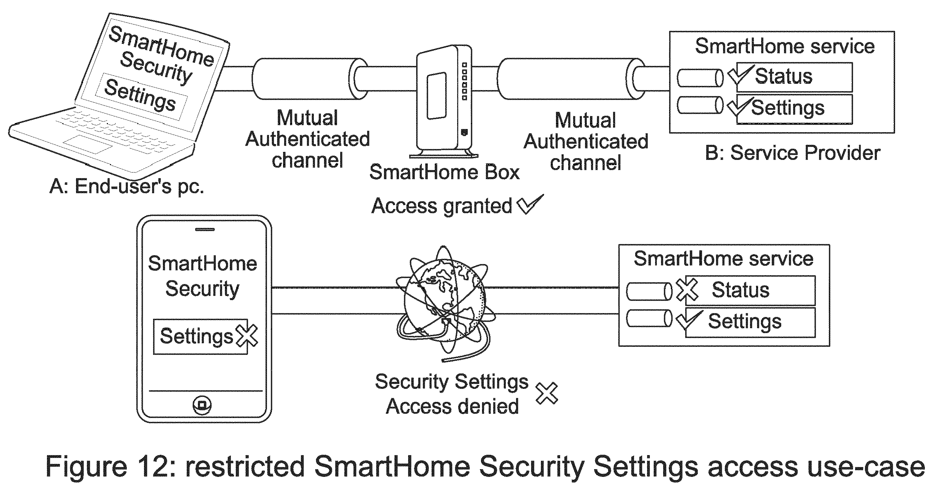

Figure 12 depicts a SmartHome use-case based on SmartHome Box which mediates accesses from sensors, home automation monitoring and controls as well as family care devices. Access to "configuration settings" is provided via the SmartHome Box, which is presumably located at home. The consumer can still check alarms status from everywhere.

An embodiment without Browser plugin is possible, using any independent piece of software, a java application (possibly signed), etc. A first connects (non-authenticated) directly to B. B pushes an applet (e.g. JavaScript) that is equivalent to the plugin in the first scenario. Then everything works as the main embodiment. The description is the same than the GW embodiment above.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

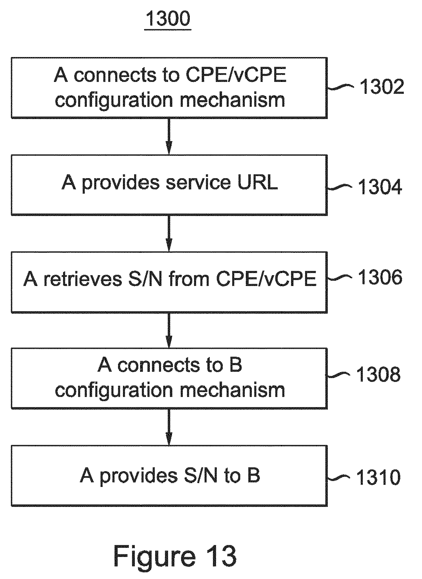

Figure 13 illustrates a flowchart showing the steps associated with the setup stage according to the present principles. In method 1300, the CPE/vCPE is configured by user A connecting to a CPE/vCPE configuration mechanism in step 1302. In step 1304, A transmits the service URL to the CPE/vCPE, wherein the service URL is included in a list so that the CPE/vCPE will in the future recognize the URL as belonging to a service that requires CPE/vCPE authentication. In step 1306, a user retrieves an unique identification associated with the CPE/vCPE, such as the serial number, and after connecting with the service provider B configuration mechanism via another secure communications channel in step 1308, the User provides the serial number to service provider B so that the service provider recognizes the serial number for the CPE/vCPE based authentication. Of course, the configuration of the CPE/vCPE, steps 1302-1304, and the configuration of the service provider side, 1306-1310, may be done in any order as desired. In an alternative embodiment, steps 1302-1310 are initiated and performed in response to a program transmitted from the service provider to the user device when the user device attempts to access the URL. In that case, a program transmitted from the service provider and running on the user device prompts a user to perform steps 1302-1304.

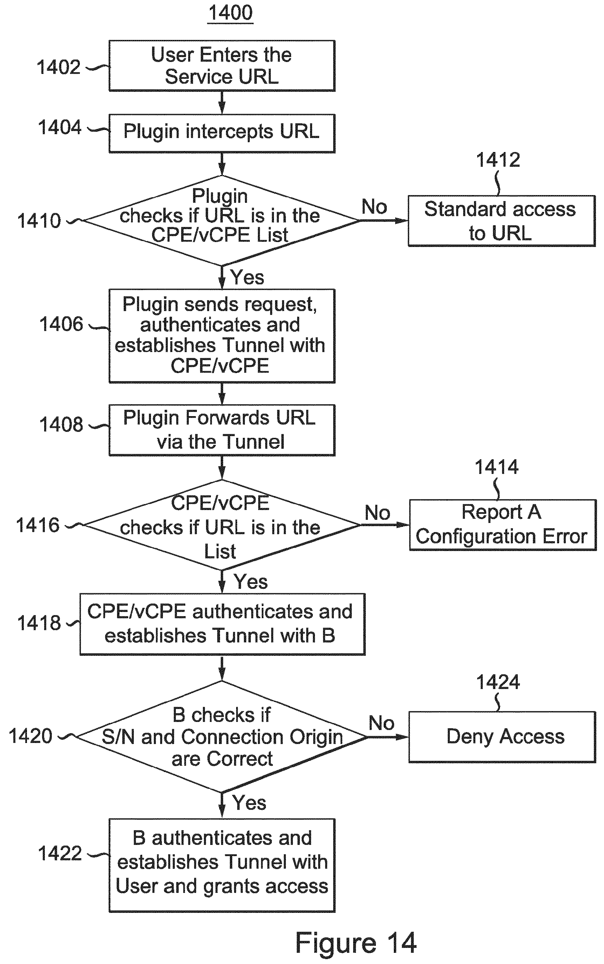

Figure 14 illustrates a flowchart showing the steps associated with the enforcement stage according to the present principles. In step 1402, when the user enters a service URL, a plugin of the user device, in step 1404, intercepts the URL. The plugin determines in step 1410 whether the URL is associated with CPE/vCPE authentication by checking the URL against a list. If not, standard access to the URL is established in step 1412. If so, the plugin transmits the request to the CPE, mutually authenticates with the CPE and establishes a mutually authenticated tunnel between the plugin and the CPE/vCPE in step 1406. Once the tunnel has been established, the plugin forwards the URL via the tunnel to the CPE/vCPE.

In step 1416, the CPE/vCPE determines whether the URL is associated with CPE/vCPE authentication by checking the URL against a list. If not, a configuration error is reported in step 1414. The configuration error may be reported by, for example, a configuration GUI, in real time via a user browser, or by a HTTP 403 Forbidden code. If so, the VPE/vCPE establishes a mutually authenticated tunnel with the service provider B associated with the URL in step 1418. Once established, the user device and the service provider mutual authenticate and establish a mutually authenticated tunnel within the previously established tunnels. Known tunnel implementations may be used here, for example, but not limited to GnuTLS, stunnel, and OpenSSL. The tunnel may be established, for example, by TLS/SSL or by IPsec. In step 1420, the service provider B checks the serial number of the CPE/vCPE, and determines whether the connection and origin are correct when determining whether requests to access the service is to be granted or denied. That is, whether A is entitled to access to the service and whether the request for service is being sent via the designated CPE/vCPE. If not, access is denied in step 1424. If so, service provider B establishes a mutually authenticated tunnel with the user device A and grants access to the requested service in step 1422.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for controlling a customer premise equipment (CPE), comprising:
receiving (1406), from a user device, a request to access a service;
mutually authenticating (1406) with the user device, and establishing a first secure communications channel between the CPE and the user device after authentication;
mutually authenticating (1418) with a service provider associated with the service, and establishing a second secure communications channel between the CPE and the service provider after authentication; and
receiving and transmitting data (1422) between the user device and the service provider via a third secure communications channel established between the user device and the service provider, the third secure communications channel being encapsulated within the first and second secure communications channels.

2. The method of claim 1, further comprising receiving (1304), from one of the user device and another service provider, a list of services associated with CPE based authentication, and performing the mutually authenticating the user device, mutually authenticating the service provider, and receiving and transmitting steps if the requested service is included in the list of services associated with CPE based authentication.

3. The method of any of claims 1-2, wherein the mutual authenticating with the CPE is performed (1306, 1308, 1310, 1406) using a serial number associated with the CPE.

4. The method of any of claims 1-3, wherein the request to access the service is received from one of a browser plugin (1404, 1410, 1406) associated with the user device, and an instruction set transmitted from the service provider (ISP Interface, Service 1 Web interface) and processed by the user device.

5. The method of any of claims 1-4, wherein the CPE is one of a physical CPE disposed in a customer location, and a virtual CPE.

6. A customer premise equipment (CPE), comprising:
a communications interface (250), connected to a user device (102) via a first network (104), and a service provider (116, 118) via a second network (112); and
a processor (210) configured to: receive from the user device a request to access the service; mutually authenticate with the user device, and establish a first secure communications channel (Mutual Authenticated channel) with the user device after authentication; mutually authenticate with the service provider associated with the service, and establish a second secure communications channel (Mutual Authenticated channel) with the service provider after authentication; and receive and transmit data between the user device and the service provider via a third secure communications channel (GW-Based Authentication channel) established between the user device and the service provider, the third secure communications channel being encapsulated within the first and second secure communications channels.

7. The customer premise equipment claim 6, further comprising a memory (220) configured to store a list of services associated with CPE based authentication, wherein the processor (210) is configured to mutually authenticate with the user device (102), mutually authenticate with the service provider (116,118), and receive and transmit data between the user device and the service provider via the third secure communications channel when the request service is included in the list of services associated with CPE based authentication.

8. The customer premise equipment of any of claims 6-7, wherein the list of services is received from one of the user device (102) and another service provider (116,118).

9. The customer premise equipment of any of claims 6-8, wherein the processor (210) is configured to mutually authenticate with service provider using a serial number associated with the customer premise equipment.

10. The customer premise equipment of any of claims 6-9, wherein the processor (210) is configured to use one of a browser plugin and instruction set received from the service provider to request to access the service when the service is included in the list of services associated with CPE based authentication.

11. A method for controlling a user device, comprising:
transmitting (1406), to a customer premise equipment (CPE), a request to access a service;
mutually authenticating (1406) with the CPE, and establishing a first secure communications channel with the CPE after authentication;
receiving (1418), via the CPE, an approval from a service provider associated with the service for accessing the service, the approval being encapsulated in a second secure communications channel between the CPE and the service provider;
establishing (1422) a third secure communications channel with the service provider, the third secure communications channel being encapsulated within the first and second secure communications channels ; and
accessing the service (1422) from the service provider via the third secure communications channel.

12. The method of claim 11, further comprising transmitting (1304) to the CPE a list of services associated with CPE based authentication, and performing the mutually authenticating, the receiving, and the accessing steps if the service is included in the list of services associated with CPE based authentication (1410, 1406).

13. The method of claim 11-12, wherein the request to access the service is transmitted by one of a browser plugin (1404) associated with the user device, and an instruction set transmitted from the service provider and processed by the user device.

14. The method of claims 11-13, wherein the CPE is one of a physical CPE disposed in a customer location, and a virtual CPE.

15. A user device for accessing a service, comprising:
a communications interface (250) connected to a customer premises equipment via a first network (104);
a processor (210) configured to transmit a request to the CPE (106,128) to access the service, to mutually authenticate with the CPE, and to establish a first secure communications channel (Mutual Authenticated channel) with the CPE after authentication, wherein upon receiving via the CPE, an approval from a service provider (116,118,134,132) associated with the service for accessing the service, the approval being encapsulated in a second secure communications channel (Mutual Authenticated channel) between the CPE and the service provider, the processor configured to establish a third communications channel (GW-Based Authentication channel) between the CPE and the service provider, the third secure communications channel being encapsulated with the first and second secure communications channels, and access the service via the third secure communications channel.
